# EUROPEAN PATENT SPECIFICATION

(11) **EP 4 397 549 B1**
(45) Date of publication and mention of the grant of the patent: **04.02.2026**
(21) Application number: 23150550.4
(22) Date of filing: 06.01.2023
(51) Int. Cl.: B60T 7/12, B60W 30/14

(54) **METHOD FOR CONTROLLING A SPEED OF A VEHICLE, CONTROL UNIT, COMPUTER PROGRAM PRODUCT, NON-TRANSITORY COMPUTER READABLE STORAGE MEDIUM, BRAKE SYSTEM, AND VEHICLE**
VERFAHREN ZUM STEUERN EINER GESCHWINDIGKEIT EINES FAHRZEUGS, STEUEREINHEIT, COMPUTERPROGRAMMPRODUKT, NICHTTRANSITORISCHES COMPUTERLESBARES SPEICHERMEDIUM, BREMSSYSTEM UND FAHRZEUG
PROCÉDÉ DE COMMANDE D'UNE VITESSE D'UN VÉHICULE, UNITÉ DE COMMANDE, PRODUIT PROGRAMME D'ORDINATEUR, SUPPORT D'INFORMATIONS LISIBLE PAR ORDINATEUR NON TRANSITOIRE, SYSTÈME DE FREINAGE ET VÉHICULE

(43) Date of publication of application: 10.07.2024
(73) Proprietor: Volvo Construction Equipment AB, 631 85 Eskilstuna (SE)
(72) Inventor: Dusemund, Björn, 54292 Trier (DE); Sanal Kumar, Krishnent, 54290 Trier (DE); Weidke, Tim, 54426 Hilscheid (DE)
(74) Representative: Lavoix

(56) References cited:
- EP-A2- 1 270 358
- CN-B- 111 071 299
- US-B1- 6 240 356

## Description

### TECHNICAL FIELD

The invention relates to a method and a control unit for controlling a speed of a vehicle depending on a determined actual driving condition of the vehicle. Further, the invention relates to a computer program product, a non-transitory computer-readable storage medium, brake system and a vehicle.

### BACKGROUND

From CN 113 561 794 A a driving control method and a device for a dual-motor pure electric loader is known. The method and the device include determining the driving mode and the motor control mode of a vehicle according to the current state and operation signals of the vehicle, calculating a target torque or a target rotating speed according to the opening degree of an accelerator pedal in different driving modes, and outputting the target torque or the target rotating speed as a reference rotating speed or a reference torque to a driving motor controller.

US 2021/0370913 A1 relates to a method for reinforcing safety of a vehicle on a ramp, which prevents a vehicle from skidding and being turned off when the vehicle starts on a reverse steep slope without applying an electrical parking brake and a vehicle thereof. In one embodiment, US 2021/0370913 A1 teaches to provide a lower and upper limit vehicle speed threshold, which may be understood as maximum and critical speed value according to the invention. According to US 2021/0370913 A1, the vehicle is in a primary vehicle speed condition when the speed is between the lower and upper limit vehicle speed threshold.

EP 3 719 355 A1 relates to a hydrostatic transmission for a work vehicle (e.g. a compact wheel loader) for preventing engine over speed during braking downhill. Depending on the position of the brake pedal and the accelerator pedal, the drive currents are generated depending on the control unit. EP 3 719 355 A1 is based on the idea of checking the vehicle speed during braking downhill and preventing the displacement of the hydraulic pump from going to zero as long as the vehicle speed is higher than a given threshold value. In other words, the displacement of the hydraulic pump is reduced during braking downhill, but the hydraulic pump is not completed closed (i.e. its displacement is not brought to zero) as long as the vehicle speed is higher than the aforementioned threshold value. Further examples of vehicle speed control known in the art are disclosed by US 6 240 356 B1 and CN 111 071 299 B.

These known solutions comprise several disadvantageous.

In particular, it is known that an electric compact wheel loader accelerates in downhill conditions, if the electric motor cannot provide a sufficient brake torque. This happens for example, if lower voltage systems are used. Consequently, on the one hand, physical limits of the transmission can be exceeded and, on the other hand, the friction brake may be overheated, which can lead to dangerous situations. This can lead in particular to failure during braking and, in the worst case, not only to fender benders or alike but also to personal damage.

### SUMMARY

An object of the invention is to provide a method and a control unit for controlling a speed of a vehicle depending on a determined actual driving condition of the vehicle as well as a computer program product, a non-transitory computer-readable storage medium, brake system and a vehicle to overcome the disadvantages outlined above. In particular, an object of the invention is to provide a method, a control unit, a computer program product, a non-transitory computer-readable storage medium, brake system and a vehicle that provides an increased braking safety.

According to a first aspect of the invention, the object is achieved by a method according to claim 1. The method is configured for controlling a speed of a vehicle depending on a determined actual driving condition of the vehicle.

Preferably, the vehicle is a working machine, for example a wheel loader.

Such a vehicle comprises a drive unit. The drive unit is coupled to at least one wheel of the vehicle. Preferably, the drive unit is coupled to each wheel of the vehicle. Alternatively, it may be preferred that the vehicle comprises a drive unit for each wheel. In particular, it may be preferred that the vehicle comprises at least two drive units, wherein each drive unit is coupled to at least two wheels of the vehicle. Preferably, the drive units is directly coupled to a wheel of the vehicle. However, it may also be preferred that the drive unit or the drive units are coupled to a wheel or coupled to several wheels via a gear box or alike.

The drive unit is configured for driving and braking the at least one wheel of the vehicle. In particular, by means of the drive unit, the vehicle is accelerated to a desired speed and/or driven with a desired speed. Further preferably, the vehicle is braked or deaccelerated by means of the drive unit. In the later case, the drive units is to be understood as some kind of motor brake.

Preferably, the drive unit is or comprises an electric motor. The electric motor may be a direct current drive or an asynchronous drive. Alternatively or additionally, the drive unit is or comprises a hydrostatic drive unit.

Further, the vehicle comprises a sensor unit. The sensor unit is configured for detecting an actual speed value of the vehicle. The sensor unit may detect the speed by measuring the rotational speed of one or more wheels. Additionally or alternatively, the sensor unit may detect the speed by measuring the rotational speed of the drive unit. It may also be preferred to measure the speed by means of global navigation satellite system.

In particular, the sensor unit is or comprises a speed sensor.

Preferably, the sensor unit is based on a potentiometer, an optical encoder, a hall sensor, an inductive encoder, a reed sensor or alike. Alternatively or additionally, the sensor unit may be based on a global navigation satellite system.

Further, the vehicle has some kind of brake system. The brake system is coupled to the at least one wheel of the vehicle. The brake system is configured for braking the at least one wheel of the vehicle. Thus, the brake system enables to decelerate the vehicle if needed. Preferably, the brake system is some kind of mechanical brake. In particular, the brake system is or comprises a friction brake unit. Usually, in preferred embodiments the brake system comprises a service brake and/or a parking brake. Preferably, the brake system comprises a disk brake and/or a drum brake.

Finally, the vehicle comprises a control unit. In particular, the vehicle comprises a control unit as described herein. The control unit is configured for controlling the speed of the vehicle depending on the actual driving condition of the vehicle. For this purpose, the control unit is signalling coupled with the sensor unit, the drive unit, and the brake system. It may be preferred that the control unit is signalling coupled to some or all device via a wire or wirelessly.

For controlling the speed of the vehicle depending on the actual driving condition of the vehicle, the method comprises several steps. These steps of the method will be elaborated in the following.

The method comprises the step of determining the actual speed value of the vehicle. The actual speed value of the vehicle is determined by means of the sensor unit. Further, the method comprises the step of determining a maximum speed value and determining a critical speed value. The maximum speed value and/or the critical speed value may be determined by the user and/or the manufacturer and/or the seller of the vehicle. In particular, the maximum speed value and/or the critical speed value depends on the drive unit the vehicle comprises. Preferably, the maximum speed value and/or the critical speed value depends on the performance data of the drive unit.

It is to be understood that the critical speed value is defined to be larger than the maximum speed value. Depending on the determined critical speed value and the determined maximum speed value the speed of the vehicle is controlled as will be described in the following.

According to a further step of the method, the actual driving condition is determined. Determining the driving condition depends on the determined actual speed value of the vehicle as well as the determined maximum speed value and the determined critical speed value. Accordingly, the driving condition is at least one of the following: an over speed driving condition, an acceleration driving condition or a regular driving condition. The over speed driving condition exists if the determined actual speed value is larger than the determined maximum speed value and smaller than the determined critical speed value. The acceleration driving condition exists if the vehicle is accelerated and the determined actual speed value is smaller than the determined maximum speed value. Finally, the regular driving condition exists if the vehicle is not accelerated and the determined actual speed value is smaller than the determined maximum speed value.

The method further comprises the step of determining a target speed value of the vehicle that is smaller than the determined maximum speed value and determining a target braking duration value. Depending on the determined a target speed value and the determined target braking duration value, the method further comprises following two steps if the driving condition is determined as the over speed driving condition: determining a speed braking signal value for actuating the friction braking unit depending on the determined target speed value, and depending on the determined target braking duration value, and providing the speed braking signal value to the brake system for actuating the friction braking unit.

If an acceleration of the machine, deviating from maximum requested speed, is being detected, the machine speed can be automatically reduced via actuation of the friction brake. By using the friction brake only for a short time, an overheating of the friction brake can be prevented. Overheating can lead to fading and can cause thermal damages.

As to further advantages, preferred embodiments and details of the method, reference is made to the corresponding aspects and embodiments of the control unit, the computer program product, the non-transitory computer-readable storage medium, the brake system and the vehicle described herein below.

According to a preferred embodiment of the method, it is provided that the method comprises further steps. As mentioned above, the method comprises the step of determining a target braking duration value. The target braking duration value is the value a braking duration of the vehicle should last. Hereby, the target braking duration value is to be determined in such a manner that the brake system, in particular the friction brake, does not overheat. The longer a braking procedure lasts the higher the risk of degeneration of the brake system. Thus, the target braking duration value is to be determined in such a manner that the brake system does not overheat. It is to be understood that the target braking duration value may vary depending on the type of brake system. For example if the brake system comprises relatively large disk brakes, the target braking duration value may be larger in comparison to a target braking duration value of a brake system having smaller disk brakes. Further, the target braking duration value may also decrease over time if the brake system is regularly used over a longer period of time as the brake system is not able to cool down sufficiently.

Additionally or alternatively, the method comprises the step of determining a target deceleration value of the vehicle. Similarly to the target braking duration value the target deceleration value depends on the type of brake system used. If the brake system comprises relatively large disk brakes, the target deceleration value may be larger in comparison to a brake system with smaller disk brakes. Also, the target deceleration value decreases over time if the brake system is regularly used over a longer period of time as the brake system is not able to cool down sufficiently.

Further, additionally or alternatively, the method comprises the step of determining the speed braking signal value for actuating the friction braking unit depends on the determined target deceleration value.

By considering the target braking duration value and/or the determined target deceleration value it decreases the risk of overheating of the brake system. In particular, controlling and efficiency of the braking of the brake system is improved.

In a further preferred embodiment, the method comprises further steps. It is provided that the method comprises the step of determining a minimum braking resting duration of the friction braking unit between a prior first braking operation due to a prior first over speed driving event and a subsequent second braking operation due to a subsequent second over speed driving event, and determining an actual braking resting duration between the prior first braking operation due to the prior first over speed driving event and the subsequent second braking operation due to the subsequent second over speed driving event, wherein the speed braking signal value for actuating the friction braking unit is only provided for actuating the friction braking unit if the determined actual braking resting duration exceeds the determined minimum braking resting duration of the friction braking unit.

By determining the minimum braking resting duration it is assured that the brake system has sufficient time to cool down to ensure safe braking of the vehicle. Further, by tracking the actual braking resting duration time, controlling and efficiency of the braking of the brake system may be improved as braking resting duration that may be too short for cooling down or longer braking resting duration that allow to cool down the braking system more than necessary for safety reasons can be considered.

In another preferred embodiment the method comprises the step of determining a maximum braking duration value that is larger than the determined target braking duration value.

Further, to prevent degeneration and overheating of the brake system, a braking procedure of the vehicle should not exceed the maximum braking duration value. Otherwise, the brake system overheats and degenerates.

Yet in a further preferred embodiment, the method comprises the step of counting the number of braking operations due to over speed driving events.

By considering the number of braking operations due to over speed drive events, durability of the brake system can be better estimated. In particular, this allows to better control the brake system with respect to the parameters introduced above.

Further in a preferred embodiment of the method it is provided that determining the minimum braking resting duration depends on at least one of the following:
- an actual weight of the vehicle,
- the determined actual speed value,
- the determined target speed value of the prior first braking operation,
- the determined target braking duration value of the prior first braking operation,
- the determined target deceleration value of the prior first braking operation,
- the counted number of braking operations due to prior over speed driving events, and
- the target speed value to be determined for the subsequent second braking operation.

According to another preferred embodiment of the method, determining the target speed value depends on at least one of the following:
- an actual weight of the vehicle,
- the determined actual speed value,
- the determined target speed value of the prior first braking operation,
- the determined target braking duration value of the prior first braking operation,
- the determined target deceleration value of the prior first braking operation,
- the counted number of braking operations due to prior over speed driving events,
- the target speed value to be determined for the subsequent second braking operation, and
- the time between a prior first over speed driving condition and a subsequent second over speed driving condition.

Further, in a preferred embodiment of the method the brake system comprises a service brake, in particular a friction brake, and/or a parking brake, in particular a spring applied hydraulically released brake unit. Preferably, the method comprises the step of releasing the hydraulic pressure in the spring applied hydraulically released brake unit depending on the speed braking signal value provided to the brake system, in particular below a spring braking force of the spring of the spring applied hydraulically released brake unit.

According to a further aspect of the invention, the object is achieved by a control unit according to claim 9. The control unit is configured for controlling a speed of a vehicle, in particular of a working machine such as a wheel loader, depending on an actual driving condition of the vehicle. Further, the control unit is configured to perform the method according to the aspect and its embodiments of the method described herein above.

As to the advantages, preferred embodiments and details of the control unit, reference is made to the corresponding aspects and embodiments of the method and/or the computer program product and/or the non-transitory computer-readable storage medium and/or the brake system and/or the vehicle described herein above and/or below.

According to a further aspect of the invention, the object is achieved by a computer program product according to claim 10. The computer program product comprising program code for performing, when executed by the control unit, the method according to the aspect and its embodiments of the method described herein above and/or below.

As to the advantages, preferred embodiments and details of the computer program product, reference is made to the corresponding aspects and embodiments of the method and/or the control unit and/or the non-transitory computer-readable storage medium and/or the brake system and/or the vehicle described herein above and/or below.

According to a further aspect of the invention, the object is achieved by a non-transitory computer-readable storage medium according to claim 11. The non-transitory computer-readable storage medium comprising instructions, which when executed by the control unit, cause the control unit to perform the method according to the aspect and its embodiments of the method described herein above.

As to the advantages, preferred embodiments and details of the non-transitory computer-readable storage medium, reference is made to the corresponding aspects and embodiments of the method and/or the control unit and/or the computer program product and/or the brake system and/or the vehicle described herein above and/or below.

According to a further aspect of the invention, the object is achieved by a brake system according to claim 12. The brake system is configured for braking at least one wheel of a vehicle, the brake system comprising a control unit of the aspect and its embodiments of the control unit described herein above.

As to the advantages, preferred embodiments and details of the brake system, reference is made to the corresponding aspects and embodiments of the method and/or the control unit and/or the computer program product and/or the non-transitory computer readable storage medium and/or the vehicle described herein above and/or below.

According to a further aspect of the invention, the object is achieved by a vehicle according to claim 13. In particular, the vehicle is a working machine such as a wheel loader.

The vehicle comprises a drive unit that is coupled to at least one wheel of the vehicle, wherein the drive unit is configured for driving and braking the at least one wheel of the vehicle, and a sensor unit that is configured for detecting actual speed value of the vehicle, and a brake system that is coupled to at least one wheel of the vehicle, wherein the brake system is configured for braking the at least one wheel of the vehicle, and a control unit according to claim 9 that is signalling coupled with the sensor unit, the drive unit, and the brake system, wherein the control unit is configured for controlling the speed of the vehicle depending on an actual driving condition of the vehicle, wherein the driving condition is one of the following: an over speed driving condition, in which the determined actual speed value is larger than the determined maximum speed value and smaller than the determined critical speed value, an acceleration driving condition, in which the vehicle is accelerated and the determined actual speed value is smaller than the determined maximum speed value, and a regular driving condition, in which the vehicle is not accelerated and the determined actual speed value is smaller than the determined maximum speed value.

As to the advantages, preferred embodiments and details of the vehicle, reference is made to the corresponding aspects and embodiments of the method and/or the control unit and/or the computer program product and/or the non-transitory computer readable storage medium and/or the brake system described herein above.

According to a preferred embodiment of the vehicle, the drive unit is or comprises an electric drive unit and/or is or comprises a hydrostatic drive unit. Additionally or alternatively, the brake system comprises a service brake, in particular a friction brake, and/or a parking brake, in particular a spring applied hydraulically re-leased brake unit.

In a further preferred embodiment, of the vehicle the sensor unit is or comprises at least one sensor that is configured for detecting the actual speed of the vehicle, and/or at least one sensor that is configured for detecting an actual acceleration of the vehicle, and/or at least one sensor that is configured for detecting an actual inclination of the vehicle, and/or at least one GNSS-sensor, and/or at least one sensor that is configured for detecting an actuation of a braking pedal, for example an angle sensor.

Embodiments of the invention are now described below with reference to the drawings. Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Figure 1: is a schematic side view of a wheel loader in a preferred embodiment;
- Figure 2: is schematic view a preferred embodiment of the brake system for controlling a speed of the wheel loader shown in Figure 1 according to one of the methods illustrated in Figures 3 and 4
- Figure 3: is a schematic block diagram of a preferred embodiment of the method for controlling a speed of the wheel loader shown in Figure 1 depending on a determined actual driving condition of the wheel loader; and
- Figure 4: is a schematic block diagram of a further preferred embodiment of the method for controlling a speed of the wheel loader shown in Figure 1 depending on a determined actual driving condition of the wheel loader.

### DETAILED DESCRIPTION OF EXAMPLE EMBODIMENTS OF THE INVENTION

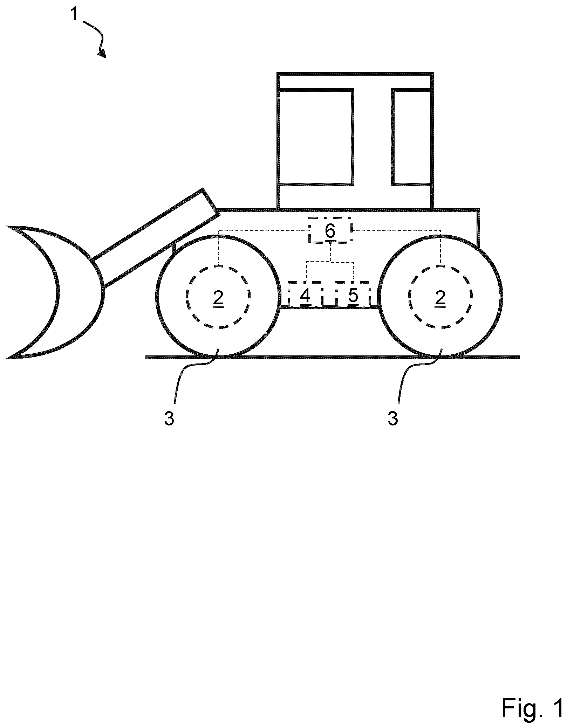

Figure 1 is a schematic side view of a wheel loader as a vehicle 1 in a preferred embodiment.

The wheel loader 1 shown in Figure 1 comprise four drive units 2 each of which is coupled to a single wheel 3 of the wheel loader 1. By means of the drive units 2 the wheel loader 1 is accelerated to a desired speed or run with a desired speed. Thus, the drive units 2 enable driving the wheel loader 1 by driving the respective wheels 3. Further, the drive units 2 are configured for braking the respective wheel 3 and, thus, the wheel loader 1. Thus, the drive units also enable deceleration of the wheels and, thus, the wheel loader 1. In this preferred embodiment, the drive units 2 are electric drive units. However, it is possible as well that the drive units 2 are hydrostatic drive units.

Further, for controlling the speed of the wheel loader 1 depending on an actual driving condition of the wheel loader 1, the wheel loader 1 comprises a sensor unit 4, a brake system 5 and a control unit 6.

The sensor unit 4 is configured for detecting actual speed value of the wheel loader 1. In this preferred embodiment, the sensor unit 4 comprises sensors that are configured for detecting the actual speed, for detecting an actual acceleration, and for detecting an actual inclination of the wheel loader as well as a sensor that is configured for detecting an actuation of the brake system 5.

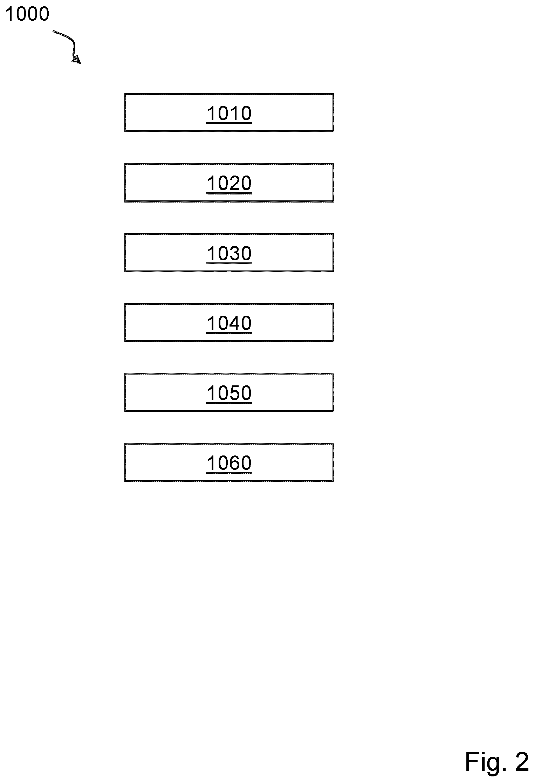

The brake system 5 is coupled to each wheel 3 of the wheel loader 1. The brake system 5 is configured for braking each wheel 3 of the vehicle. In this preferred embodiment, the brake system comprises a friction brake as service brake and a spring applied hydraulically re-leased brake unit as parking brake. This particular embodiment of the brake system 5 allows to prevent overheating in a particular preferred manner. The brake system 5 is described in detail below with respect to Figure 2.

The control unit 6 is signalling coupled to each drive unit 2, the sensor unit 4 and the brake system 5 of the wheel loader 1. The control unit 6 is configured for controlling the speed of the wheel loader 1 depending on an actual driving condition of the wheel loader 1. Thereby, the actual driving condition of the wheel loader 1 is one of the following:
- an over speed driving condition, in which the determined actual speed value is larger than the determined maximum speed value and smaller than the determined critical speed value,
- an acceleration driving condition, in which the wheel loader 1 is accelerated and the determined actual speed value is smaller than the determined maximum speed value, and
- a regular driving condition, in which the wheel loader 1is not accelerated and the determined actual speed value is smaller than the determined maximum speed value.

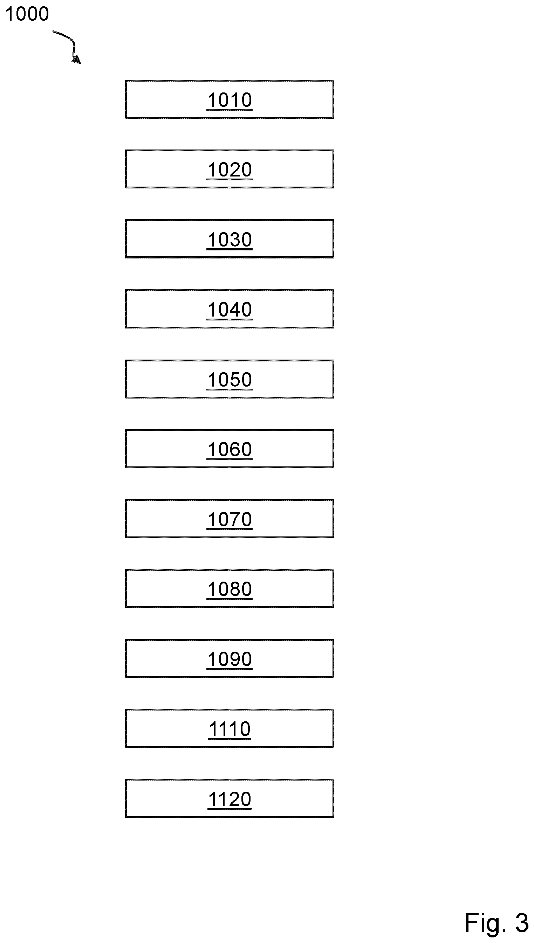

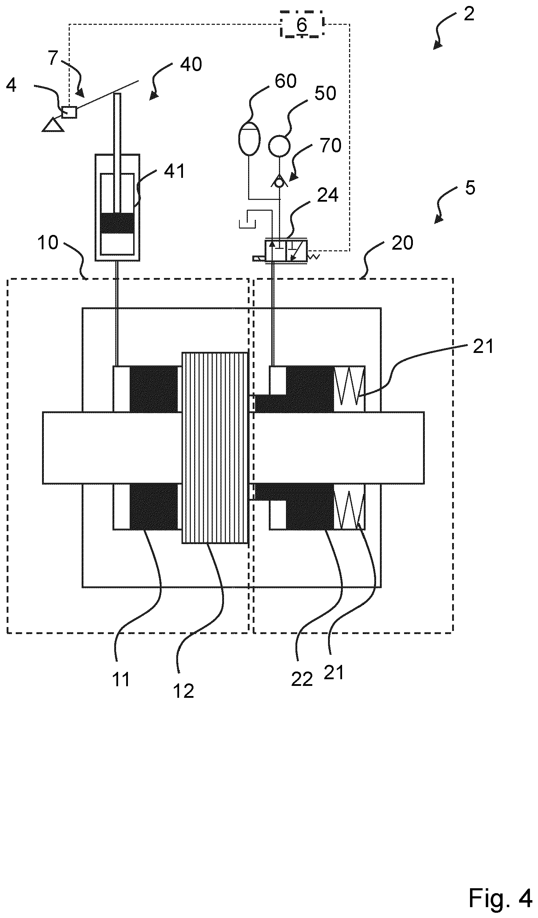

Figure 2 is schematic view of a preferred embodiment of the brake system 5 for controlling the speed of the wheel loader 1 shown in Figure 1 according to one of the embodiments of the method schematically illustrated as block diagrams in Figures 3 and 4.

The brake system 5 comprises a hydraulically actuated service brake 10. The service brake 10 is configured for braking the wheel loader 1. For this purpose, the service brake 10 comprises a service brake cylinder 11 and a disk pack unit 12. The service brake cylinder 11 is configured to transfer a service braking force to the disk pack unit 12 while braking the wheel loader 1. The disk pack unit 12 is configured for braking the wheel loader 1 depending on the braking force.

Furthermore, the brake system 5 comprises a hydraulically actuated parking brake 20. The parking brake 20 is a spring applied hydraulic release brake. The spring applied hydraulic release brake is configured for braking the wheel loader 1 depending on a parking brake force. For this purpose, the parking brake 20 comprises a spring braking unit 21, a hydraulic park braking control unit 23, and a parking brake cylinder 22.

The spring braking unit 21 is configured to generate a default parking brake force and to transfer the default parking brake force onto a parking brake cylinder 22. The control unit 6 is configured to generate a release force and to transfer the release force onto the parking brake cylinder 22 in order to control the parking brake force. Finally, the parking brake cylinder 22 is in mechanical contact with the disk pack unit 12. Thereby, the parking brake cylinder 22 is configured to transfer the parking braking force to the disk pack unit 12 while braking depending on the control parking brake force and the default parking brake force.

The control unit 6 is signalling coupled to a control valve 24. The control valve 24 is hydraulically connected to the parking brake 20 and configured for controlling a hydraulic pressure inside of the parking brake 20. The hydraulic pressure inside of the parking brake 20 is controlled depending on a braking signal for hydraulically actuating and/or releasing the parking brake 20. In this preferred embodiment, the control valve 24 is a proportional 3/2 directional valve with a spring reset. The control valve 24 controls the hydraulic flow into the parking brake 20 for releasing the parking brake 20 and out of the parking brake 20 for braking the parking brake 20 depending on the braking signal detected by a sensor unit 4. The sensor unit 4 is adapted for detecting the braking signal for braking the wheel loader 1. Hereto, the sensor unit 4 may comprise different kind of sensors that are adapted to detect a respective braking signal. For example, the sensor unit may comprise an angle sensor, a position sensor, and/or a hydraulic pressure sensor. In this preferred embodiment, the sensor unit 4 comprises an angle sensor that is configured for detecting an angle of a braking pedal 7.

For controlling the braking of the wheel loader 1, the service brake 10 comprises a hydraulic service braking control unit 40 that is configured to generate the service braking force and to transfer the service braking force to the service brake cylinder 11. In this preferred embodiment, the hydraulic service braking control unit 40 comprises a master brake cylinder 41 that is hydraulically connected to the service brake cylinder 11 for generating the service braking force. It is to be understood that the parking brake 20 is actuated depending on an opening pressure and the service brake 10 is actuated depending on an actuation pressure.

Figures 3 and 4 are schematic block diagrams of preferred embodiments of the method 1000 for controlling a speed of the wheel loader 1 shown in Figure 1 depending on a determined actual driving condition of the wheel loader. Preferably, the steps of both embodiments are performed in the order as described in the following. It may be preferred that some or all of the steps are executed in parallel if possible. Additional or alternative preferred embodiments of the method 1000 may execute some or all of the steps in an order that is different to the order as described herein below.

In Figure 3, the method 1000 comprises six steps 1010, 1020, 1030, 1040, 1050, 1060.

A first step of the method 1000 relates to determining 1010 the actual speed value of the wheel loader 1 provided by means of the sensor unit 4.

Subsequently, the method comprises the steps of determining 1020 a maximum speed value and determining a critical speed value, wherein the critical speed value is larger than the maximum speed value, and determining 1030 the actual driving condition of the wheel loader 1. Thereby, the driving condition is at least one of the following: an over speed driving condition, an acceleration driving condition, and a regular driving condition. The driving condition is considered as over speed driving condition if the determined actual speed value is larger than the determined maximum speed value and smaller than the determined critical speed value. The acceleration driving condition is considered as driving condition if the wheel loader 1 is accelerated and the determined actual speed value is smaller than the determined maximum speed value. Finally, the regular driving condition is considered as driving condition if the wheel loader 1 is not accelerated and the determined actual speed value is smaller than the determined maximum speed value.

Next, the method comprises the step of determining 1040 a target speed value of the wheel loader 1 that is smaller than the determined maximum speed value. Determining 1040 the target speed value depends on at least one of the following:
- an actual weight of the wheel loader 1,
- the determined actual speed value,
- the determined target speed value of the prior first braking operation,
- the determined target braking duration value of the prior first braking operation,
- the determined target deceleration value of the prior first braking operation,
- the counted number of braking operations due to prior over speed driving events,
- the target speed value to be determined for the subsequent second braking operation, and
- the time between a prior first over speed driving condition and a subsequent second over speed driving condition.

Finally, the method 1000 comprises the steps of determining 1050 a speed braking signal value for actuating the friction braking unit depending on the determined target speed value, and of providing 1060 the speed braking signal value to the brake system 5 for actuating the friction braking unit if the driving condition is determined as the over speed driving condition.

The preferred embodiment of the method 1000 schematically depicted as block diagram in Figure 4 is based on the method described with respect to Figure 3. The embodiment referred to in Figure 4 comprises five additional steps in comparison to the embodiment described herein above with respect to Figure 4.

The method 1000 comprises the steps of determining 1070 a target braking duration value, and determining 1080 a target deceleration value of the wheel loader. It is to be understood that the step of determining 1050 a speed braking signal value for actuating the friction braking unit additionally depends on determined target braking duration value and the determined target deceleration value.

Further, the method 1000 comprises the steps of determining 1090 a minimum braking resting duration of the friction braking unit between a prior first braking operation due to a prior first over speed driving event and a subsequent second braking operation due to a subsequent second over speed driving event, and determining 1100 an actual braking resting duration between the prior first braking operation due to the prior first over speed driving event and the subsequent second braking operation due to the subsequent second over speed driving event. Thereby, the speed braking signal value for actuating the friction braking unit is only provided for actuating the friction braking unit if the determined actual braking resting duration exceeds the determined minimum braking resting duration of the friction braking unit.

Finally, the method 1000 comprises the steps of determining 1110 a maximum braking duration value that is larger than the determined target braking duration value and counting 1120 the number of braking operations due to over speed driving events.

It is to be understood that determining 1090 the minimum braking resting duration depends on at least one of the following:
- an actual weight of the wheel loader 1,
- the determined actual speed value,
- the determined target speed value of the prior first braking operation,
- the determined target braking duration value of the prior first braking operation,
- the determined target deceleration value of the prior first braking operation,
- the counted number of braking operations due to prior over speed driving events, and
- the target speed value to be determined for the subsequent second braking operation.

In case the brake system 5 comprises a friction brake as service brake and a spring applied hydraulically released brake unit as parking brake, it is to be understood that the method comprises the step of releasing the hydraulic pressure in the spring applied hydraulically released brake unit depending on the speed braking signal value provided to the brake system 5, in particular below a spring braking force of the spring of the spring applied hydraulically released brake unit.

### REFERENCE SIGNS

- 1: vehicle
- 2: drive unit
- 3: wheel
- 4: sensor unit
- 5: brake system
- 6: control unit
- 7: braking pedal
- 10: service brake
- 11: service brake cylinder
- 12: disk pack unit
- 20: parking brake
- 21: spring braking unit
- 22: parking brake cylinder
- 24: control valve
- 41: master brake cylinder
- 50: hydraulic pump
- 60: hydraulic accumulator
- 70: check valve

## Claims

1. A method (1000) for controlling a speed of a vehicle (1), in particular of a working machine such as a wheel loader (1), depending on a determined actual driving condition of the vehicle (1),
the vehicle (1) comprising:
- a drive unit (2) that is coupled to at least one wheel (3) of the vehicle (1), wherein the drive unit (2) is configured for driving and braking the at least one wheel (3) of the vehicle (1), wherein the drive unit (2) is configured for braking by providing a motor braking torque, and
- a sensor unit (4) that is configured for detecting an actual speed value of the vehicle (1), and
- a brake system (5) that is coupled to at least one wheel (3) of the vehicle (1), wherein the brake system (5) is configured for braking the at least one wheel (3) of the vehicle (1), and
- a control unit (6) that is signalling coupled with the sensor unit (4), the drive unit (2), and the brake system (5), wherein the control unit (6) is configured for controlling the speed of the vehicle (1),
the method (1000) comprising the steps:
- determining (1010) the actual speed value of the vehicle (1) provided by means of the sensor unit (4), and
- determining (1020) a maximum speed value and determining a critical speed value, wherein the critical speed value is larger than the maximum speed value, and
- determining (1030) the actual driving condition of the vehicle (1), wherein the driving condition is at least one of the following:
∘ an over speed driving condition if the determined actual speed value is larger than the determined maximum speed value and smaller than the determined critical speed value,
∘ an acceleration driving condition if the vehicle (1) is accelerated and the determined actual speed value is smaller than the determined maximum speed value,
∘ a regular driving condition if the vehicle (1) is not accelerated and the determined actual speed value is smaller than the determined maximum speed value,
- determining (1040) a target speed value of the vehicle (1) that is smaller than the determined maximum speed value, and
- determining (1070) a target braking duration value,
- wherein if the driving condition is determined as the over speed driving condition, the method (1000) comprising the steps of
∘ determining (1050) a speed braking signal value for actuating the friction braking unit depending on the determined target speed value, and depending on the determined target braking duration value, and
∘ providing (1060) the speed braking signal value to the brake system (5) for actuating the friction braking unit.

2. The method (1000) according to claim 1, comprising the steps:
- determining (1080) a target deceleration value of the vehicle (1), and/or
- determining (1050) the speed braking signal value for actuating the friction braking unit depends on the determined target deceleration value.

3. The method (1000) according to any claims 1-2, comprising the steps:
- determining (1090) a minimum braking resting duration of the friction braking unit between a prior first braking operation due to a prior first over speed driving event and a subsequent second braking operation due to a subsequent second over speed driving event, and
- determining (1100) an actual braking resting duration between the prior first braking operation due to the prior first over speed driving event and the subsequent second braking operation due to the subsequent second over speed driving event, wherein
- the speed braking signal value for actuating the friction braking unit is only provided for actuating the friction braking unit if the determined actual braking resting duration exceeds the determined minimum braking resting duration of the friction braking unit.

4. The method (1000) according to any claims 1-3, comprising the step:
- determining (1110) a maximum braking duration value that is larger than the determined target braking duration value.

5. The method (1000) according to any claims 1-4, comprising the step:
- counting (1120) the number of braking operations due to over speed driving events.

6. The method (1000) according to claim 3 or to claim 3 and any one of the claims 4 or 5, wherein determining (1090) the minimum braking resting duration depends on at least one of the following:
- an actual weight of the vehicle (1),
- the determined actual speed value,
- the determined target speed value of the prior first braking operation,
- the determined target braking duration value of the prior first braking operation,
- the determined target deceleration value of the prior first braking operation,
- the counted number of braking operations due to prior over speed driving events, and
- the target speed value to be determined for the subsequent second braking operation.

7. The method (1000) according to any claims 1-6, wherein determining (1040) the target speed value depends on at least one of the following:
- an actual weight of the vehicle (1),
- the determined actual speed value,
- the determined target speed value of the prior first braking operation,
- the determined target braking duration value of the prior first braking operation,
- the determined target deceleration value of the prior first braking operation,
- the counted number of braking operations due to prior over speed driving events,
- the target speed value to be determined for the subsequent second braking operation, and
- the time between a prior first over speed driving condition and a subsequent second over speed driving condition.

8. The method (1000) according to any claims 1-7,
- wherein the brake system (5) comprises a service brake (10), in particular a friction brake, and/or a parking brake (20), in particular a spring applied hydraulically released brake unit, and
- the method comprises the step of releasing the hydraulic pressure in the spring applied hydraulically released brake unit depending on the speed braking signal value provided to the brake system (5), in particular below a spring braking force of the spring of the spring applied hydraulically released brake unit.

9. A control unit (6) for controlling a speed of a vehicle (1), in particular of a working machine such as a wheel loader (1), depending on an actual driving condition of the vehicle (1), wherein the control unit (6) is configured to perform the method (1000) of any of claims 1-7.

10. A computer program product comprising program code for performing, when executed by a control unit (6), the method (1000) of any of claims 1-7.

11. A non-transitory computer-readable storage medium comprising instructions, which when executed by the control unit (6), cause a control unit (6) to perform the method (1000) of any of claims 1-7.

12. A brake system (5) for braking at least one wheel (3) of a vehicle (1), the brake system (5) comprising a control unit (6) according to claim 9.

13. A vehicle (1), in particular of a working machine such as a wheel loader (1), the vehicle (1) comprising:
- a drive unit (2) that is coupled to at least one wheel (3) of the vehicle (1), wherein the drive unit (2) is configured for driving and braking the at least one wheel (3) of the vehicle (1), and
- a sensor unit (4) that is configured for detecting actual speed value of the vehicle (1), and
- a brake system (5) that is coupled to at least one wheel (3) of the vehicle (1), wherein the brake system (5) is configured for braking the at least one wheel (3) of the vehicle (1), and
- a control unit (6) according to claim 9 that is signalling coupled with the sensor unit (4), the drive unit (2), and the brake system (5), wherein the control unit (6) is configured for controlling the speed of the vehicle (1) depending on an actual driving condition of the vehicle (1), wherein the driving condition is one of the following:
∘ an over speed driving condition, in which the determined actual speed value is larger than the determined maximum speed value and smaller than the determined critical speed value,
∘ an acceleration driving condition, in which the vehicle (1) is accelerated and the determined actual speed value is smaller than the determined maximum speed value, and
∘ a regular driving condition, in which the vehicle (1) is not accelerated and the determined actual speed value is smaller than the determined maximum speed value.

14. The vehicle (1) according to claim 13,
- wherein the drive unit (2) is or comprises an electric drive unit (2) and/or is or comprises a hydrostatic drive unit (2), and/or
- wherein the brake system (5) comprises a service brake, in particular a friction brake, and/or a parking brake, in particular a spring applied hydraulically re-leased brake unit.

15. The vehicle (1) according to any of claims 13-14, wherein the sensor unit (4) is or comprises
- at least one sensor that is configured for detecting the actual speed of the vehicle (1), and/or
- at least one sensor that is configured for detecting an actual acceleration of the vehicle (1), and/or
- at least one sensor that is configured for detecting an actual inclination of the vehicle (1), and/or
- at least one GNSS-sensor, and/or
- at least one sensor that is configured for detecting an actuation of a braking pedal, for example an angle sensor.

## Patentansprüche

1. Verfahren (1000) zum Steuern einer Geschwindigkeit eines Fahrzeugs (1), insbesondere einer Arbeitsmaschine, wie beispielsweise eines Radladers (1), abhängig von einem bestimmten Ist-Fahrzustand des Fahrzeugs (1),
das Fahrzeug (1) umfassend:
- eine Antriebseinheit (2), die mit mindestens einem Rad (3) des Fahrzeugs (1) gekoppelt ist, wobei die Antriebseinheit (2) zum Antreiben und Bremsen des mindestens einen Rads (3) des Fahrzeugs (1) konfiguriert ist, wobei die Antriebseinheit (2) zum Bremsen durch Bereitstellen eines Motorbremsmoments konfiguriert ist, und
- eine Sensoreinheit (4), die zum Erfassen eines Geschwindigkeits-Istwerts des Fahrzeugs (1) konfiguriert ist, und
- eine Bremsanlage (5), die mit mindestens einem Rad (3) des Fahrzeugs (1) gekoppelt ist, wobei die Bremsanlage (5) zum Abbremsen des mindestens einen Rads (3) des Fahrzeugs (1) konfiguriert ist, und
- eine Steuereinheit (6), die signaltechnisch mit der Sensoreinheit (4), der Antriebseinheit (2) und der Bremsanlage (5) gekoppelt ist, wobei die Steuereinheit (6) zum Steuern der Geschwindigkeit des Fahrzeugs (1) konfiguriert ist,
das Verfahren (1000) umfassend die folgenden Schritte:
- Bestimmen (1010) des Ist-Geschwindigkeitswerts des Fahrzeugs (1), der mittels der Sensoreinheit (4) bereitgestellt wird, und
- Bestimmen (1020) eines maximalen Geschwindigkeitswerts und Bestimmen eines kritischen Geschwindigkeitswerts, wobei der kritische Geschwindigkeitswert größer als der maximale Geschwindigkeitswert ist, und
- Bestimmen (1030) des Ist-Fahrzustands des Fahrzeugs (1), wobei der Fahrzustand mindestens einer der Folgenden ist:
∘ ein Übergeschwindigkeit-Fahrzustand, wenn der bestimmte Ist-Geschwindigkeitswert größer als der bestimmte maximale Geschwindigkeitswert und kleiner als der bestimmte kritische Geschwindigkeitswert ist,
∘ ein Beschleunigung-Fahrzustand, wenn das Fahrzeug (1) beschleunigt wird und der bestimmte Ist-Geschwindigkeitswert kleiner ist als der bestimmte maximale Geschwindigkeitswert,
∘ ein regulärer Fahrzustand, wenn das Fahrzeug (1) nicht beschleunigt wird und der bestimmte Ist-Geschwindigkeitswert kleiner ist als der bestimmte maximale Geschwindigkeitswert,
- Bestimmen (1040) eines Soll-Geschwindigkeitswerts des Fahrzeugs (1), der kleiner ist als der bestimmte maximale Geschwindigkeitswert, und
- Bestimmen (1070) eines Soll-Bremsdauerwerts,
- wobei, wenn der Fahrzustand als Übergeschwindigkeit-Fahrzustand bestimmt wird, das Verfahren (1000) die folgenden Schritte umfasst
∘ Bestimmen (1050) eines Geschwindigkeitsbremssignalwerts zum Betätigen der Reibungsbremseinheit abhängig von dem bestimmten Soll-Geschwindigkeitswert und abhängig von dem bestimmten Soll-Bremsdauerwert, und
∘ Bereitstellen (1060) des Geschwindigkeitsbremssignalwerts an die Bremsanlage (5) zum Betätigen der Reibungsbremseinheit.

2. Verfahren (1000) nach Anspruch 1, umfassend die folgenden Schritte:
- Bestimmen (1080) eines Soll-Verzögerungswerts des Fahrzeugs (1), und/oder
- Bestimmen (1050) des Geschwindigkeitsbremssignalwerts zum Betätigen der Reibungsbremseinheit abhängig von dem bestimmten Soll-Verzögerungswert.

3. Verfahren (1000) nach einem der Ansprüche 1-2, umfassend die folgenden Schritte:
- Bestimmen (1090) einer minimalen Bremsrestdauer der Reibungsbremseinheit zwischen einem vorherigen ersten Bremsvorgang aufgrund eines vorherigen ersten Übergeschwindigkeit-Fahrereignisses und einem nachfolgenden zweiten Bremsvorgang aufgrund eines nachfolgenden zweiten Übergeschwindigkeit-Fahrereignisses, und
- Bestimmen (1100) einer Ist-Bremsrestdauer zwischen dem vorherigen ersten Bremsvorgang aufgrund des vorherigen ersten Übergeschwindigkeit-Fahrereignisses und dem nachfolgenden zweiten Bremsvorgang aufgrund des nachfolgenden zweiten Übergeschwindigkeit-Fahrereignisses, wobei
- der Geschwindigkeitsbremssignalwert zum Betätigen der Reibungsbremseinheit nur dann zum Betätigen der Reibungsbremseinheit bereitgestellt wird, wenn die bestimmte Ist-Bremsrestdauer die bestimmte minimale Bremsrestdauer der Reibungsbremseinheit überschreitet.

4. Verfahren (1000) nach einem der Ansprüche 1-3, umfassend den folgenden Schritt:
- Bestimmen (1110) eines maximalen Bremsdauerwerts, der größer ist als der bestimmte Soll-Bremsdauerwert.

5. Verfahren (1000) nach einem der Ansprüche 1-4, umfassend den folgenden Schritt:
- Zählen (1120) der Anzahl von Bremsvorgängen aufgrund von Übergeschwindigkeit-Fahrereignisseen.

6. Verfahren (1000) nach Anspruch 3 oder Anspruch 3 und einem der Ansprüche 4 oder 5, wobei ein Bestimmen (1090) der minimalen Bremsrestdauer von mindestens einem der Folgenden abhängt:
- einem ist-Gewicht des Fahrzeugs (1),
- dem bestimmten Ist-Geschwindigkeitswert,
- dem bestimmten Soll-Geschwindigkeitswert des vorherigen ersten Bremsvorgangs,
- dem bestimmten Soll-Bremsdauerwert des vorherigen ersten Bremsvorgangs,
- dem bestimmten Soll-Verzögerungswert des vorherigen ersten Bremsvorgangs,
- der gezählten Anzahl an Bremsvorgängen aufgrund vorheriger Übergeschwindigkeit-Fahrereignisse, und
- dem Soll-Geschwindigkeitswert, der für den nachfolgenden zweiten Bremsvorgang zu bestimmen ist.

7. Verfahren (1000) nach einem der Ansprüche 1 bis 6, wobei ein Bestimmen (1040) des Soll-Geschwindigkeitswerts von mindestens einem der Folgenden abhängt:
- einem ist-Gewicht des Fahrzeugs (1),
- dem bestimmten Ist-Geschwindigkeitswert,
- dem bestimmten Soll-Geschwindigkeitswert des vorherigen ersten Bremsvorgangs,
- dem bestimmten Soll-Bremsdauerwert des vorherigen ersten Bremsvorgangs,
- dem bestimmten Soll-Verzögerungswert des vorherigen ersten Bremsvorgangs,
- der gezählten Anzahl an Bremsvorgängen aufgrund vorheriger **Übergeschwindigkeit-Fahrereignisse,**
- dem Soll-Geschwindigkeitswert, der für den nachfolgenden zweiten Bremsvorgang zu bestimmen ist, und
- der Zeit zwischen einem ersten Übergeschwindigkeit-Fahrzustand und einem nachfolgenden zweiten Übergeschwindigkeit-Fahrzustand.

8. Verfahren (1000) nach einem der Ansprüche 1-7,
- wobei die Bremsanlage (5) eine Betriebsbremse (10), insbesondere eine Reibungsbremse, und/oder eine Feststellbremse (20), insbesondere eine federbetätigte, hydraulisch freigegebene Bremseinheit, umfasst, und
- das Verfahren den Schritt eines Freigebens des hydraulischen Drucks in der federbetätigten, hydraulisch gelüfteten Bremseinheit abhängig von dem an die Bremsanlage (5) bereitgestellten Geschwindigkeitsbremssignalwert, insbesondere unterhalb einer Federbremskraft der Feder der federbetätigten, hydraulisch freigegebenen Bremseinheit umfasst.

9. Steuereinheit (6) zum Steuern einer Geschwindigkeit eines Fahrzeugs (1), insbesondere einer Arbeitsmaschine, wie beispielsweise eines Radladers (1), abhängig von einem Ist-Fahrzustand des Fahrzeugs (1), wobei die Steuereinheit (6) zum Durchführen des Verfahrens (1000) nach einem der Ansprüche 1 bis 7 konfiguriert ist.

10. Computerprogrammprodukt, umfassend Programmcode zum Durchführen des Verfahrens (1000) nach einem der Ansprüche 1-7, wenn es von einer Steuereinheit (6) ausgeführt wird.

11. Nicht-transitorisches computerlesbares Speichermedium, umfassend Anweisungen, die, wenn sie von der Steuereinheit (6) ausgeführt werden, eine Steuereinheit (6) veranlassen, das Verfahren (1000) nach einem der Ansprüche 1-7 durchzuführen.

12. Bremsanlage (5) zum Abbremsen mindestens eines Rades (3) eines Fahrzeugs (1), die Bremsanlage (5) umfassend eine Steuereinheit (6) nach Anspruch 9.

13. Fahrzeug (1), insbesondere von einer Arbeitsmaschine, wie beispielsweise ein Radlader (1), das Fahrzeug (1) umfassend:
- eine Antriebseinheit (2), die mit mindestens einem Rad (3) des Fahrzeugs (1) gekoppelt ist, wobei die Antriebseinheit (2) zum Antreiben und Abbremsen des mindestens einen Rads (3) des Fahrzeugs (1) konfiguriert ist, und
- eine Sensoreinheit (4), die zum Erfassen eines Ist-Geschwindigkeitswerts des Fahrzeugs (1) konfiguriert ist, und
- eine Bremsanlage (5), die mit mindestens einem Rad (3) des Fahrzeugs (1) gekoppelt ist, wobei die Bremsanlage (5) zum Abbremsen des mindestens einen Rads (3) des Fahrzeugs (1) konfiguriert ist, und
- eine Steuereinheit (6) nach Anspruch 9, die signaltechnisch mit der Sensoreinheit (4), der Antriebseinheit (2) und der Bremsanlage (5) gekoppelt ist, wobei die Steuereinheit (6) zum Steuern der Geschwindigkeit des Fahrzeugs (1) abhängig von einem Ist-Fahrzustand des Fahrzeugs (1) konfiguriert ist, wobei der Fahrzustand einer der Folgenden ist:
∘ ein Übergeschwindigkeit-Fahrzustand, bei dem der bestimmte Ist-Geschwindigkeitswert größer als der bestimmte maximale Geschwindigkeitswert und kleiner als der bestimmte kritische Geschwindigkeitswert ist,
∘ ein Beschleunigung-Fahrzustand, bei dem das Fahrzeug (1) beschleunigt wird und der bestimmte Ist-Geschwindigkeitswert kleiner ist als der bestimmte maximale Geschwindigkeitswert, und
∘ ein regulärer Fahrzustand, bei dem das Fahrzeug (1) nicht beschleunigt wird und der bestimmte Ist-Geschwindigkeitswert kleiner ist als der bestimmte maximale Geschwindigkeitswert.

14. Fahrzeug (1) nach Anspruch 13,
- wobei die Antriebseinheit (2) eine elektrische Antriebseinheit (2) ist oder umfasst, und/oder eine hydrostatische Antriebseinheit (2) ist oder umfasst, und/oder
- wobei das Bremssystem (5) eine Betriebsbremse, insbesondere eine Reibungsbremse, und/oder eine Feststellbremse, insbesondere eine federbetätigte, hydraulisch freigegebene Bremseinheit, umfasst.

15. Fahrzeug (1) nach einem der Ansprüche 13-14, wobei die Sensoreinheit (4) Folgendes ist oder umfasst
- mindestens ein Sensor, der zum Erfassen der Ist-Geschwindigkeit des Fahrzeugs (1) konfiguriert ist, und/oder
- mindestens ein Sensor, der zum Erfassen einer Ist-Beschleunigung des Fahrzeugs (1) konfiguriert ist, und/oder
- mindestens ein Sensor, der zum Erfassen einer Ist-Neigung des Fahrzeugs (1) konfiguriert ist, und/oder
- mindestens ein GNSS-Sensor, und/oder
- mindestens ein Sensor, der zum Erfassen einer Betätigung eines Bremspedals konfiguriert ist, zum Beispiel ein Winkelsensor.

## Revendications

1. Procédé (1000) de commande de la vitesse d'un véhicule (1), en particulier d'une machine de travail telle qu'une chargeuse sur roues (1), en fonction d'une condition de conduite réelle déterminée du véhicule (1),
le véhicule (1) comprenant :
- une unité d'entraînement (2) qui est couplée à au moins une roue (3) du véhicule (1), dans lequel l'unité d'entraînement (2) est configurée pour entraîner et freiner l'au moins une roue (3) du véhicule (1), dans lequel l'unité d'entraînement (2) est configurée pour freiner en fournissant un couple de freinage du moteur, et
- une unité de capteur (4) qui est configurée pour détecter une valeur de vitesse réelle du véhicule (1), et
- un système de freinage (5) qui est couplé à au moins une roue (3) du véhicule (1), dans lequel le système de freinage (5) est configuré pour freiner l'au moins une roue (3) du véhicule (1), et
- une unité de commande (6) qui est couplée par signalisation à l'unité de capteur (4), à l'unité d'entraînement (2) et au système de freinage (5), dans lequel l'unité de commande (6) est configurée pour commander la vitesse du véhicule (1),
le procédé (1000) comprenant les étapes de :
- détermination (1010) de la valeur de la vitesse réelle du véhicule (1) fournie au moyen de l'unité de capteur (4), et
- détermination (1020) d'une valeur de vitesse maximale et détermination d'une valeur de vitesse critique, dans lequel la valeur de vitesse critique est supérieure à la valeur de vitesse maximale, et
- détermination (1030) de la condition de conduite réelle du véhicule (1), dans lequel la condition de conduite est au moins l'une des suivantes :
∘ une condition de conduite en excès de vitesse si la valeur de la vitesse réelle déterminée est supérieure à la valeur de la vitesse maximale déterminée et inférieure à la valeur de la vitesse critique déterminée,
∘ une condition de conduite en accélération si le véhicule (1) est accéléré et que la valeur de la vitesse réelle déterminée est inférieure à la valeur de la vitesse maximale déterminée,
∘ une condition de conduite normale si le véhicule (1) n'est pas accéléré et que la valeur de la vitesse réelle déterminée est inférieure à la valeur de la vitesse maximale déterminée,
- détermination (1040) d'une valeur de vitesse cible du véhicule (1) qui est inférieure à la valeur de la vitesse maximale déterminée, et
- détermination (1070) d'une valeur de durée de freinage cible,
- dans lequel, si la condition de conduite est déterminée comme étant la condition de conduite en excès de vitesse, le procédé (1000) comprend les étapes de
∘ détermination (1050) d'une valeur de signal de freinage de vitesse pour actionner l'unité de freinage par friction en fonction de la valeur de vitesse cible déterminée, et en fonction de la valeur de durée de freinage cible déterminée, et
∘ fourniture (1060) de la valeur de signal de freinage de vitesse au système de freinage (5) pour actionner l'unité de freinage par friction.

2. Procédé (1000) selon la revendication 1, comprenant les étapes de :
- détermination (1080) d'une valeur de décélération cible du véhicule (1), et/ou
- détermination (1050) de la valeur de signal de freinage de vitesse pour actionner l'unité de freinage par friction en fonction de la valeur de décélération cible déterminée.

3. Procédé (1000) selon l'une quelconque des revendications 1 et 2, comprenant les étapes de :
- détermination (1090) d'une durée minimale de repos des freins de l'unité de freinage par friction entre une première opération de freinage antérieure due à un premier événement de conduite en excès de vitesse antérieur et une seconde opération de freinage ultérieure due à un second événement de conduite en excès de vitesse ultérieur, et
- détermination (1100) d'une durée réelle de repos des freins entre la première opération de freinage antérieure due à un premier événement de conduite en excès de vitesse antérieur et la seconde opération de freinage ultérieure due à un second événement de conduite en excès de vitesse ultérieur, dans lequel
- la valeur du signal de freinage de vitesse pour l'actionnement de l'unité de freinage par friction n'est fournie pour l'actionnement de l'unité de freinage par friction que si la durée réelle déterminée de repos des freins dépasse la durée minimale déterminée de repos des freins de l'unité de freinage par friction.

4. Procédé (1000) selon l'une quelconque des revendications 1 à 3, comprenant l'étape de :
- détermination (1110) d'une valeur maximale de durée de freinage qui est supérieure à la valeur cible déterminée de durée de freinage.

5. Procédé (1000) selon l'une quelconque des revendications 1 à 4, comprenant l'étape de :
- comptage (1120) du nombre d'opérations de freinage dues à des événements de conduite en excès de vitesse.

6. Procédé (1000) selon la revendication 3 ou la revendication 3 et l'une quelconque des revendications 4 ou 5, dans lequel la détermination (1090) de la durée minimale de repos des freins dépend d'au moins l'un des éléments suivants :
- un poids réel du véhicule (1),
- la valeur de la vitesse réelle déterminée,
- la valeur de la vitesse cible déterminée de la première opération de freinage antérieure,
- la valeur de la durée de freinage cible déterminée de la première opération de freinage antérieure,
- la valeur de décélération cible déterminée pour la première opération de freinage antérieure,
- le nombre d'opérations de freinage comptées dues à des événements de conduite en excès de vitesse antérieurs, et
- la valeur de la vitesse cible à déterminer pour la seconde opération de freinage ultérieure.

7. Procédé (1000) selon l'une quelconque des revendications 1 à 6, dans lequel la détermination (1040) de la valeur de la vitesse cible dépend d'au moins l'un des éléments suivants :
- un poids réel du véhicule (1),
- la valeur de la vitesse réelle déterminée,
- la valeur de la vitesse cible déterminée de la première opération de freinage antérieure,
- la valeur de la durée de freinage cible déterminée de la première opération de freinage antérieure,
- la valeur de décélération cible déterminée pour la première opération de freinage antérieure,
- le nombre d'opérations de freinage comptées dues à des événements de conduite en excès de vitesse antérieurs,
- la valeur de la vitesse cible à déterminer pour la seconde opération de freinage ultérieure, et
- le temps écoulé entre une première condition de conduite en excès de vitesse antérieure et une seconde condition de conduite en excès de vitesse ultérieure.

8. Procédé (1000) selon l'une quelconque des revendications 1 à 7,
- dans lequel le système de freinage (5) comprend un frein de service (10), en particulier un frein à friction, et/ou un frein de stationnement (20), en particulier une unité de freinage à serrage par ressort et desserrage hydraulique, et
- le procédé comprend l'étape consistant à relâcher la pression hydraulique dans l'unité de freinage à serrage par ressort et desserrage hydraulique en fonction de la valeur de signal de freinage de vitesse fournie au système de freinage (5), en particulier en dessous d'une force de freinage à ressort de l'unité de freinage à serrage par ressort et desserrage hydraulique.

9. Unité de commande (6) pour commander la vitesse d'un véhicule (1), en particulier d'une machine de travail telle qu'une chargeuse sur roues (1), en fonction d'une condition de conduite réelle du véhicule (1), dans laquelle l'unité de commande (6) est configurée pour réaliser le procédé (1000) selon l'une quelconque des revendications 1 à 7.

10. Produit de programme informatique comprenant un code de programme pour réaliser, lorsqu'il est exécuté par une unité de commande (6), le procédé (1000) selon l'une quelconque des revendications 1 à 7.

11. Support de stockage non transitoire lisible par ordinateur comprenant des instructions qui, lorsqu'elles sont exécutées par l'unité de commande (6), amènent une unité de commande (6) à réaliser le procédé (1000) selon l'une quelconque des revendications 1 à 7.

12. Système de freinage (5) pour freiner au moins une roue (3) d'un véhicule (1), le système de freinage (5) comprenant une unité de commande (6) selon la revendication 9.

13. Véhicule (1), en particulier d'une machine de travail telle qu'une chargeuse sur roues (1), le véhicule (1) comprenant :
- une unité d'entraînement (2) qui est couplée à au moins une roue (3) du véhicule (1), dans lequel l'unité d'entraînement (2) est configurée pour entraîner et freiner l'au moins une roue (3) du véhicule (1), et
- une unité de capteur (4) qui est configurée pour détecter la valeur de vitesse réelle du véhicule (1), et
- un système de freinage (5) qui est couplé à au moins une roue (3) du véhicule (1), dans lequel le système de freinage (5) est configuré pour freiner l'au moins une roue (3) du véhicule (1), et
- une unité de commande (6) selon la revendication 9 qui est couplée par signalisation à l'unité de capteur (4), l'unité d'entraînement (2) et le système de freinage (5), dans lequel l'unité de commande (6) est configurée pour commander la vitesse du véhicule (1) en fonction d'une condition de conduite réelle du véhicule (1), dans lequel la condition de conduite est l'une des conditions suivantes :
∘ une condition de conduite en excès de vitesse dans laquelle la valeur de la vitesse réelle déterminée est supérieure à la valeur de la vitesse maximale déterminée et inférieure à la valeur de la vitesse critique déterminée,
∘ une condition de conduite en accélération dans laquelle le véhicule (1) est accéléré et la valeur de la vitesse réelle déterminée est inférieure à la valeur de la vitesse maximale déterminée, et
∘ une condition de conduite normale dans laquelle le véhicule (1) n'est pas accéléré et la valeur de la vitesse réelle déterminée est inférieure à la valeur de la vitesse maximale déterminée.

14. Véhicule (1) selon la revendication 13,
- dans lequel l'unité d'entraînement (2) est ou comprend une unité d'entraînement électrique (2) et/ou est ou comprend une unité d'entraînement hydrostatique (2), et/ou
- dans lequel le système de freinage (5) comprend un frein de service, en particulier un frein à friction, et/ou un frein de stationnement, en particulier une unité de freinage à serrage par ressort et desserrage hydraulique.

15. Véhicule (1) selon l'une quelconque des revendications 13 et 14, dans lequel l'unité de capteur (4) est ou comprend
- au moins un capteur qui est configuré pour détecter la vitesse réelle du véhicule (1), et/ou
- au moins un capteur qui est configuré pour détecter une accélération réelle du véhicule (1), et/ou
- au moins un capteur qui est configuré pour détecter une inclinaison réelle du véhicule (1), et/ou
- au moins un capteur GNSS, et/ou
- au moins un capteur qui est configuré pour détecter un actionnement d'une pédale de frein, par exemple un capteur d'angle.
